# EUROPÄISCHE PATENTSCHRIFT

(11) **EP 1 451 918 B1**
(45) Veröffentlichungstag und Bekanntmachung des Hinweises auf die Patenterteilung: **17.08.2005**
(21) Anmeldenummer: 02787758.8
(22) Anmeldetag: 21.11.2002
(51) Int. Cl.: H02K 7/18

(54) **EINRICHTUNG UND VERFAHREN ZUR ERZEUGUNG ELEKTRISCHER ENERGIE**
DEVICE AND METHOD FOR PRODUCING ELECTRICAL ENERGY
DISPOSITIF ET PROCEDE DE PRODUCTION D'ENERGIE ELECTRIQUE

(30) Priorität: 07.12.2001 AT 19232001
(43) Veröffentlichungstag der Anmeldung: 01.09.2004
(73) Patentinhaber: VA TECH HYDRO GmbH & Co., 1141 Wien (AT)
(72) Erfinder: WINKLER, Stefan, A-4040 Linz (AT); HESS, Günther, A-4020 Linz (AT); HELL, Johann, A-3053 Laaben (AT); GILLMEIER, Friedrich, A-2514 Traiskirchen (AT)
(74) Vertreter: VA TECH Patente GmbH & Co
(86) Internationale Anmeldenummer: PCT/EP2002/013058
(87) Internationale Veröffentlichungsnummer: WO 2003/049257

(56) Entgegenhaltungen:
- EP-A- 0 977 343
- WO-A-92/20134
- DE-C- 748 113
- DE-U- 20 105 185
- US-A- 3 353 028
- US-A- 4 367 413
- US-A- 4 720 640
- US-A- 4 755 690
- US-A- 4 804 855
- US-A- 6 011 334
- PATENT ABSTRACTS OF JAPAN vol. 2002, no. 02, 2. April 2002 (2002-04-02) -& JP 2001 298902 A (NAKANO DENKI KK), 26. Oktober 2001 (2001-10-26)
- PATENT ABSTRACTS OF JAPAN vol. 2000, no. 11, 3. Januar 2001 (2001-01-03) & JP 2000 213446 A (SHIBAURA DENSAN KK), 2. August 2000 (2000-08-02)

## Beschreibung

Die vorliegende Erfindung bezieht sich auf eine Einrichtung und ein Verfahren zur Erzeugung elektrischer Energie aus einem strömenden Medium, z.B. Wasser, mit einer Anzahl von Turbinen-Generatoreinheiten, die zumindest abschnittsweise übereinander und/oder nebeneinander angeordnet und miteinander zu einem oder mehreren Modulen verbunden sind. Weiters betrifft die Erfindung eine Anlage zur Erzeugung elektrischer Energie und ein Verfahren zum Umbau einer solchen Anlage.

Eine Einrichtung der oben genannten Art geht beispielsweise aus der US 4,804,855 und der 4,755,690 (Obermeyer) hervor. Darin ist eine Einrichtung mit einer Vielzahl von übereinander und nebeneinander angeordneten und zu Modulen verbundenen Turbinen-Generatoreinheiten beschrieben, die an einem Damm zwischen zwei Pfeilern angeordnet sind und mittels eines Krans angehoben und abgesenkt werden können. Die Turbinen-Generatoreinheiten sind in Form von sogenannten Rohrgeneratoren ausgebildet, bei welchen eine bimenförmige Röhre zur Aufnahme des Generators vorgesehen ist, an deren sich verjüngenden Ende eine Turbine angeordnet ist, welche drehfest mit dem Generator über eine horizontale Welle verbunden ist, die in der Röhre gelagert ist. Die Röhre ist an ihrem vorderen, sich verjüngenden Ende über Leitbleche an einem den Generator und die Turbine umgebenden Einlaufrohr abgestützt.

Im Vergleich zu großen Rohrgeneratoren herkömmlicher Kraftwerke bietet die Anordnung von mehreren vergleichsweise wesentlich kleineren Turbinen-Generatoreinheiten nebeneinander und übereinander den Vorteil einer erheblich kürzeren baulichen Länge und damit verbunden geringere Aufwendungen im Bereich Infrastruktur, aber auch eines flexiblen Betriebes. Bei einer großen Anzahl von Turbinen-Generatoreinheiten besteht die Gefahr, dass durch Überlagerung von Schwingungen einzelner Einheiten starke Beanspruchungen eines Moduls auftreten. Weiters ist bei einer großen Anzahl von Turbinen-Generatoreinheiten mit einem vergleichsweise hohen Gewicht des Moduls zu rechnen, welches einen entsprechend verstärkten Kran und eine entsprechende Infrastruktur zur Folge hat.

Es sind natürlich Generatoren unterschiedlicher Bauweise bekannt und unter Anderem auch mit permanentmagnetischer Erregung. Solche Generatoren gehen auch aus der EP 977 343 A1, der US 6 011 334 A, der US 4 367 413 A, der JP 2000-213 446 A, der US 3 353 028 A und der DE 20 105 185 U hervor.

Es ist eine Aufgabe der vorliegenden Erfindung, die aus dem Stand der Technik bereits bekannten Einrichtungen weiter zu verbessern und insbesondere konstruktiv einfachere, kompaktere und günstigere Turbinen-Generatoreinheiten anzugeben.

Diese Aufgabe wird erfindungsgemäß dadurch gelöst, in dem zumindest ein Generator einer Turbinen-Generatoreinheit als Synchrongenerator ausgebildet ist, bei welchem als Erregung permanentmagnetische Pole vorgesehen sind.

Durch die Erfindung wird das bekannte und erprobte Konzept der elektrisch erregten Synchrongeneratoren verlassen und es wird ein neuer Typ eines Generators eingesetzt, welcher den Vorteil eines besonders kompakten, einfachen und günstigen Aufbaus aufweist. Beim Einsatz dieses Generatortyps in einem Modul mit nebeneinander und/oder übereinander angeordneten Turbinen-Generatoreinheiten ergibt sich zusätzlich aber auch der wesentliche Vorteil, dass das Gewicht weiter verringert wird, da man die elektrische Erregung, d.h. die Erregungswicklungen mit allen erforderlichen elektrischen Teilen, einsparen kann. Dadurch kann zum Installieren solcher Module eine geringer dimensionierte Infrastruktur und zum Anheben und Absenken der Module ein kleinerer Kran verwendet werden, was sich in hohem Maße auf die Baukosten einer Anlage auswirkt.
Das Fehlen der elektrischen Erregung vereinfacht aber natürlich auch den konstruktiven Aufbau wesentlich, was sich direkt positiv auf die erforderliche Baugröße und auf die Kosten einer Turbinen-Generatoreinheiten und die Kühlung auswirkt.

Eine Anlage zur Erzeugung elektrischer Energie mit einer Dammstruktur wird im Rahmen der vorliegenden Erfindung in vorteilhafter Weise so ausgestaltet, dass eine Mehrzahl von Turbinen-Generatoreinheiten nebeneinander angeordnet und abgestützt sind, wobei die Generatoren der Turbinen-Generatoreinheiten als Synchrongeneratoren ausgebildet sind, die zur Erregung permanentmagnetische Pole aufweisen.

Weiters eignet sich die vorliegende Erfindung in besonderem Maße zum Umbau bestehender Anlagen, die vorwiegend zum zumindest temporären Speichern von Wasser vorgesehen sind, wie z.B. Schleusen, in eine Anlage zur Erzeugung elektrischer Energie. Dabei verfügt diese Struktur über zumindest ein lösbares, zum Speichern des Mediums nutzbares Element, z.B. ein Wehr, wobei im Rahmen des erfindungsgemäßen Verfahrens ein den Abmessungen des lösbaren Elements entsprechendes Modul hergestellt wird, welches eine Anzahl von nebeneinander und/oder übereinander angeordnete Turbinen-Generatoreinheiten, mit Synchrongeneratoren mit permanentmagnetischer Erregung, aufweist, gegebenenfalls ein Mittel zum Heben und Senken des lösbaren Elementes an das Gewicht des Moduls angepasst oder neu installiert wird, und das lösbare Element mit Hilfe des Mittels zum Heben und Senken von der Struktur entfernt und das Modul mit den Turbinen-Generatoreinheiten anstelle oder zusätzlich zu dem lösbaren Element in der Struktur mit Hilfe des Mittels zum Heben und Senken positioniert wird, wobei die in dem Modul angeordneten Turbinen-Generatoreinheiten über eine Leitung zum Abführen der durch die Turbinen-Generatoreinheiten erzeugten elektrischen Energie mit einem Energieversorgungs-Netzwerk verbunden werden und, erforderlichenfalls, bei zumindest teilweisem Abließen des gespeicherten Mediums durch die Turbinen-Generatoreinheiten des Moduls, elektrische Energie erzeugt wird, und wobei gegebenenfalls zur Wiederherstellung der Speicherfunktion der Struktur das Modul entfernt und durch das lösbare Element ersetzt wird.

Im Betrieb werden die miteinander zu einem Modul verbundenen Turbinen-Generatoreinheiten zeitgleich von dem Medium durchströmt, wobei drehbar gelagerte Turbinenschaufeln und drehfest mit diesem verbundene Rotoren mit permanentmagnetischen Polen des Moduls in Rotation versetzt werden. In Zusammenwirken mit konzentrisch um die Rotoren drehfest in dem Modul angeordnete Statoren der Generatoren der Turbinen-Generatoreinheiten wird elektrische Energie erzeugt. Bei einer Nutzung der Erfindung an einer bereits vorhandenen Struktur kann der Umweltaspekt gesteigert werden, da keinerlei die Umwelt beeinträchtigende Infrastrukturmaßnahmen gesetzt werden müssen, sondern die bestehende Infrastruktur verwendet werden kann.

Weitere vorteilhafte Ausgestaltungsformen der vorliegenden Erfindung ergeben sich aus den abhängigen Unteransprüchen.

Die permanentmagnetische Erregung kann nun entweder am Rotor oder alternativ am Stator angeordnet sein. Je nach konstruktiven Vorgaben und Anforderungen kann die günstigste Variante eingesetzt werden.

Eine sehr vorteilhaft einsetzbare Ausführungsvariante einer Turbinen-Generatoreinheit ist eine Rohrturbinen-Generatoreinheit. Die Befestigung dieser Turbinen-Generatoreinheiten wird vorteilhaft in an sich bekannter Weise so ausgeführt, dass die Turbinen-Generatoreinheiten im Bereich des Turbinenläufers und/oder in ihrem im wesentlichen zylindrischen Bereich des Turbinengehäuses an den zugehörigen Rahmen oder Rahmenelementen des Moduls abgestützt sind.

Die in Strömungsrichtung vor den Turbinenläufern der Turbinen-Generatoreinheiten eines Moduls Leitschaufeln angeordneten Leitschaufeln können gleichzeitig dazu verwendet werden die Turbinen-Generatoreinheiten zu halten, wodurch sich eine weitere konstruktive Vereinfachung ergibt.

Ein optimaler Wirkungsgrad wird dadurch erreicht, indem die Turbinen-Generatoreinheiten mit Saugrohren versehen sind, welche von dem die Turbinen-Generatoreinheiten antreibenden Medium durchströmbar sind.

Eine weitere sehr vorteilhaft einsetzbare Ausführungsvariante einer Turbinen-Generatoreinheit erhält man, wenn die Turbine einer Turbinen-Generatoreinheit drehbar gelagerte Turbinenschaufeln aufweist, die im Bereich ihrer äußeren Enden kraftschlüssig mit einem ringförmigen Rotor des Generators der Turbinen-Generatoreinheit verbunden sind, und wobei der Stator des Generators der Turbinen-Generatoreinheit konzentrisch um den Rotor drehfest in dem Modul angeordnet ist. Durch die günstige Lage des Schwerpunktes solcher Turbinen-Generatoreinheiten in Bezug auf die Befestigung der Einheiten selbst, aber auch in Bezug auf die Verankerung des Moduls und der Lastaufnahmemittel werden insbesondere Schwingungen und Kippmomente vermieden, sodass die Konstruktion des Moduls selbst, aber auch deren Führung und Halterung in vorteilhafter Weise geringer dimensioniert und somit leichter ausgeführt werden kann. Der bei herkömmlichen Anlagen durch den Rohrgenerator beanspruchte zentrale Bereich der Turbinen-Generatoreinheiten wird bei der erfindungsgemäßen Lösung verkleinert und kann als zusätzlicher Durchströmquerschnitt genutzt werden, sodass sich der Wirkungsgrad der Turbinen-Generatoreinheiten zusätzlich verbessern lässt.

Eine optimale Ausnützung der in dem Medium verfügbaren Energie bei geringem Platzverbrauch ergibt sich dadurch, dass die durch den Rotor bzw. Stator des Generators definierte Öffnung von dem die Turbine antreibenden Medium durchströmbar ist.

Ein optimaler Wirkungsgrad solcher Turbinen-Generatoreinheiten wird dadurch erreicht, dass die Turbinen-Generatoreinheiten mit Einlaufrohren versehen sind, welche von dem die Turbinen-Generatoreinheiten antreibenden Medium durchströmbar sind.

Eine Verbesserung des Platzverbrauches der Turbinen-Generatoreinheiten in dem Modul ergibt sich, wenn die Statoren benachbarter Turbinen-Generatoreinheiten eines Moduls unmittelbar nebeneinander und/oder übereinander angeordnet sind.

Die anströmbare Fläche kann weiter optimiert werden, wenn die Einlaufrohre benachbarter Turbinen-Generatoreinheiten unmittelbar nebeneinander und/oder übereinander angeordnet sind, wobei der Öffnungsquerschnitt des Einlaufrohres im Bereich der Turbine kleiner als der Öffnungsquerschnitt des Einlaufrohres an dem - in Strömungsrichtung - vor der Turbine liegenden offenen Ende ist und die Differenz dieser Öffnungsquerschnitte größer oder gleich der Summe der Querschnitte des Rotors und des Stators des Generators ist.

Eine besonders einfache Konstruktion ergibt sich dadurch, dass das Einlaufrohr im Bereich der Turbine bzw. des Generators als ein Gehäuse ausgebildet ist, in welchem der Stator verankert ist. Darüber hinaus ist es von Vorteil, in den Einlaufrohren der Turbinen-Generatoreinheiten Leitschaufeln anzuordnen, mittels welchen die Turbine und der Rotor des Generators gehalten werden.

Eine besonders einfache und kostengünstige Einrichtung ergibt sich dadurch, dass der Ringraum zwischen Rotor und Stator des Generators mit einem Raumabschnitt verbunden ist, welcher von dem durch die Turbine fließenden Medium durchströmt wird, und dass dieser Ringraum von dem Medium durchströmbar ist. Bevorzugt ist der Ringraum zu beiden Seiten des Rotors bzw. Generators über den gesamten Umfang durchströmbar. In diesem Fall entfällt das Erfordernis einer Dichtung und die Einheiten bzw. Module können besonders kostengünstig und weitgehend wartungsfrei gestaltet werden und werden durch das vorbeifließende Medium zusätzlich gekühlt. Dabei sind der Stator und der Rotor für sich gegen Eindringen des vorbeiströmenden Mediums abgedichtet bzw. gegenüber dem Medium elektrisch isoliert ausgebildet.

Bei einer alternativen Ausführungsform ist der Spalt zwischen Rotor und Stator des Generators gegenüber dem die Turbine antreibenden Medium gedichtet und der Ringraum zwischen Rotor und Stator mit einem Gas, insbesondere Luft, gefüllt. In diesem Fall ist es von Vorteil, die Dichtung entlang des Rotors anzuordnen, und zwar kann die Dichtung wahlweise am rotierenden Teil oder am Stator befestigt sein.

Eine weitere Verbesserung hinsichtlich der Flexibilität einer solchen Einrichtung ergibt sich dadurch, dass die Turbine zur Energieerzeugung in beide Richtungen drehbar ausgebildet ist.

Darüber hinaus kann der Wirkungsgrad eines Moduls weiter verbessert werden, in dem die Ausrichtung der Turbinenschaufeln bezüglich der Strömungsrichtung des Mediums verstellbar sind.

Bei einer bevorzugten, besonders wirtschaftlichen Variante der erfindungsgemäßen Einrichtung beträgt die elektrische Leistung des Generators einer einzelnen Turbinen-Generatoreinheit zwischen 100 kW und 1000 kW, vorzugsweise zwischen 200 kW und 700 kW.

Eine Anlage kann insbesondere dann wirtschaftlich und effizient hergestellt und betrieben werden, wenn die Anzahl der übereinander und/oder nebeneinander angeordneten Turbinen-Generatoreinheiten zwischen 5 und 500, vorzugsweise zwischen 50 und 250 beträgt.

Eine weitere Verbesserung hinsichtlich der Dimensionierung ergibt sich, wenn die Turbinen-Generatoreinheiten bzw. die Module mit einer Einrichtung zum Heben und Senken verbindbar sind.

Ebenfalls ganz besonders vorteilhaft ist es, wenn die Turbinen-Generatoreinheiten zumindest teilweise durch das vorbeifließende Medium kühlbar sind, da dann das Kühlsystem kleiner ausgelegt werden kann oder im Falle der vollständigen Kühlung durch das vorbeifließende Medium sogar völlig entfallen kann. Die damit verbundenen Vorteile hinsichtlich Konstruktion, Größe, Gewicht und Kosten sind direkt einsichtlich.

Weitere Vorteile und erfindungsgemäße Merkmale ergeben sich aus der nachfolgenden, nicht einschränkenden Beschreibung von Ausführungsbeispielen der Erfindung, wobei auf die beiliegenden Figuren 1 bis 3 Bezug genommen wird, die folgendes zeigen:
Figur 1 einen Schnitt durch ein Ausführungsbeispiel einer Turbinen-Generatoreinheit in sogenannter Straflo-Bauweise,
Figur 2 einen Schnitt durch ein Ausführungsbeispiel einer Turbinen-Generatoreinheit in Rohrturbinenbauweise, und
Figur 3 einen Schnitt durch eine Wasserkraftanlage mit einer Anordnung mehrerer Turbinen-Generatoreinheiten.

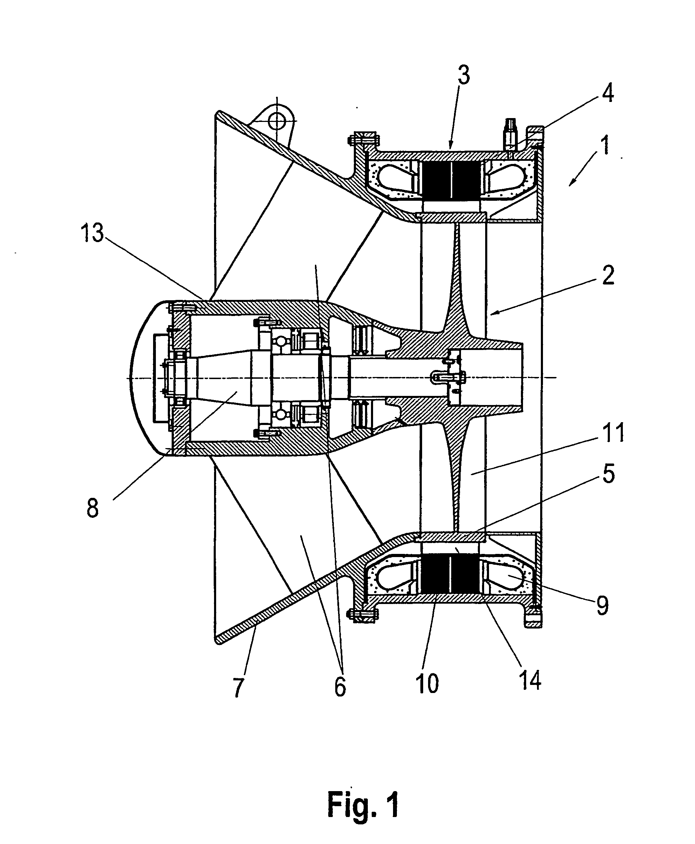

Die Turbinen-Generatoreinheit 1 gemäß Figur 1 weist eine Turbine 2 mit Turbinenschaufeln 11 auf, die kraftschlüssig miteinander und mit einer Welle 8 verbunden sind, welche in einem bimenförmigen Lagergehäuse 13 der Turbinen-Generatoreinheit 1 mittels Wälz-, Gleit- und/oder Kugellager drehbar gelagert und gegen das umströmende Medium, z.B. Wasser, gedichtet ist. Das Lagergehäuse 13 ist mittels Leitschaufeln 6 an einem konischen Einlaufrohr 7 befestigt.

Im Bereich der Enden der Turbinenschaufeln 11 befindet sich der Generator 3, welcher einen ringförmigen Rotor 5 des Generators 3 der Turbinen-Generatoreinheit 1 aufweist, der mit den Turbinenschaufeln 11 kraftschlüssig verbunden ist. Konzentrisch um den Rotor 5 ist der ebenso ringförmige Stator 4 des Generators 3 angeordnet, welcher drehfest in dem Modul angeordnet ist und, bei dem gezeigten Ausführungsbeispiel, in einem als Gehäuse ausgebildeten Abschnitt des Einlaufrohres 7 verankert ist. Der Rotor 5 des Generators 3 weist hier nicht näher dargestellte Permanentmagnetpole auf, die als Erregung für den Generator 3 dienen. Der Stator 4 besteht in hinlänglich bekannter Weise aus dem Blechpaket 10 und den Wicklungen 9.

Zwischen dem Rotor 5 und dem Stator 4 befindet sich ein ebenso ringförmiger Spalt-Zwischenraum 14, der bei dem vorliegenden Ausführungsbeispiel mit Gas, z.B. Luft, gefüllt ist, in dem der Rotor 5 gegenüber dem durch das Einlaufrohr 7 fließende Medium abgedichtet wird, beispielsweise durch eine Dichtung zwischen den Stimflächen des Rotors 5 und der gegenüberliegenden Stirnfläche des durch das Einlaufrohr 7 gebildeten Gehäuses. Alternativ kann dieser Spalt-Zwischenraum 14 auch von dem durch das Einlaufrohr 7 fließenden Medium durchströmt werden, sodass dieser Spalt 14 im Betrieb ständig mit dem Medium, z.B. Wasser, gefüllt ist und eventuell durchströmt wird. Dazu müssen die elektrischen Teile des Generators 3 selbstverständlich gegenüber dem Medium isoliert ausgeführt sein.

Ähnliche Turbinen mit Generatoren sind für Anwendungen als einzelne stationäre Einheiten mit vergleichsweise großer Leistungsklasse bereits bekannt. Unter anderem ist ein Turbinen-Generatorsatz dieses Typs in den US 4,046,403, US 4,123,666 und US 4,464,580 beschrieben.

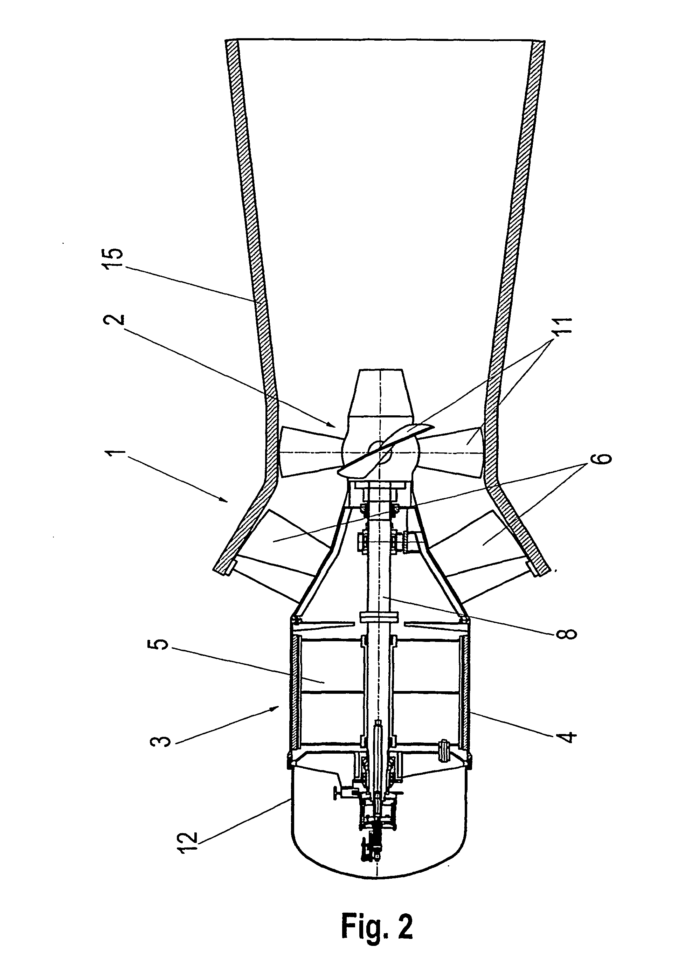

Figur 2 zeigt nun ein weiteres Ausführungsbeispiels einer Turbinen-Generatoreinheit 1 mit permanentmagneterregtem Generator 3. Bei diesem Beispiel ist der Generator 3 in einem bimenförmigen Generatorgehäuse 12 angeordnet. Der Rotor 5 des Generators 3 ist kraftschlüssig mit einer Welle 8, die mittels Wälz-, Gleit- und/oder Kugellager drehbar im Generatorgehäuse 12 gelagert ist, verbunden, die durch eine Turbine 2 angetrieben wird. Dazu ist am in Strömungsrichtung dem Generator 3 abgewandten Ende der Welle 8 kraftschlüssig eine Turbine 2 mit Turbinenschaufeln 11 angeordnet, die durch das vorbeifließende Medium in Rotation versetzt wird.

Der Rotor 5 weist nicht näher dargestellte Permanentmagnetpole auf, die als Erregung für den Generator 3 dienen. Der Stator 4 ist direkt an der Innenwand des Generatorgehäuses 12 ortsfest befestigt. Die Kühlung des Generators 3 erfolgt hier ausschließlich über das vorbeifließende Medium.

Das Generatorgehäuse 12 ist gegen das umströmende Medium, z.B. Wasser, abgedichtet, und mittels Leitschaufeln 6 an einem konischen Ansaugrohr 15 befestigt.

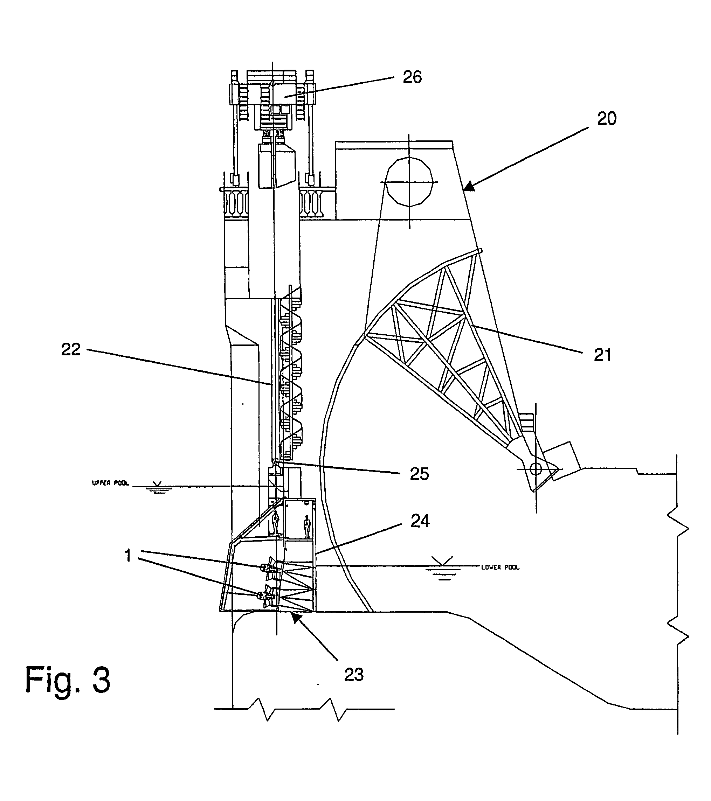

Fig. 3 zeigt eine Anlage zur Erzeugung elektrischer Energie aus einem strömenden Medium, nämlich Wasser, mit einer Dammstruktur 20, mittels welcher ein Bereich mit höherem Wasserpegel (UPPER POOL) von einem Bereich mit niedrigerem Wasserpegel (LOWER POOL) getrennt werden kann, im vorliegenden Fall durch ein Wehr 21, welches durch Verschwenken um eine horizontale Achse heb- und senkbar ist, wobei in der gehobenen Position des Wehrs 21 ein Abfließen des Wassers aus dem Bereich mit dem höheren Wasserpegel in den Bereich mit niedrigerem Wasserpegel möglich ist und in der abgesenkten Position des Wehrs 21 verhindert wird.

Weiters weist die Dammstruktur 20 zu beiden Seiten dem Wehr 21 benachbarte vertikale seitliche Führungen 22 auf, welche zur Führung und Abstützung von Turbinen-Generatoreinheiten 1 dienen, die im vorliegenden Fall nebeneinander und übereinander angeordnet und matrixförmig zu einem Modul 23 zusammengefasst sind, welches bei dem gezeigten Ausführungsbeispiel in einem Rahmen 24 integriert ist, welcher zusätzlich zur Aufnahme weiterer Elemente, wie beispielsweise einem Rechen, Serviceeinrichtungen u.dgl., ausgestattet ist. Abweichend von dem vorliegenden Ausführungsbeispiel können die einzelnen Turbinen-Generatoreinheiten 1 aber auch wabenförmig oder in jeder anderen beliebigen Struktur angeordnet sein, z.B. in Strömungsrichtung versetzt etc. In diesem Beispiel werden Turbinen-Generatoreinheiten 1 in sogenannter Straflo-Bauweise, gemäß der Beschreibung zu Fig. 1, verwendet, wobei natürlich ohne Einschränkung der Allgemeinheit auch jede beliebige andere Turbinen-Generatoreinheit, wie beispielsweise eine Rohrturbine, gemäß Fig. 2, verwendet werden kann.

Das Modul 23 weist an seiner Oberseite ein Lastaufnahmemittel 25 für einen Kran 26 auf, welcher an der Dammstruktur 20 angeordnet ist, und mittels welchem der Modul 23 gehoben und gesenkt werden kann, wobei alle Turbinen-Generatoreinheiten 1 eines Moduls 23 in dessen abgesenkten Zustand zur Erzeugung elektrischer Energie aus dem durch die Turbinen fließenden Wasser genutzt werden können.

## Patentansprüche

1. Einrichtung zur Erzeugung elektrischer Energie aus einem strömenden Medium, z.B. Wasser, mit einer Anzahl von Turbinen-Generatoreinheiten (1), die zumindest abschnittsweise übereinander und/oder nebeneinander angeordnet und miteinander zu einem oder mehreren Modulen (23) verbunden sind, **dadurch gekennzeichnet, dass** zumindest ein Generator (3) einer Turbinen-Generatoreinheit (1) als Synchrongenerator ausgebildet ist, bei welchem als Erregung permanentmagnetische Pole vorgesehen sind.

2. Einrichtung nach Anspruch 1, **dadurch gekennzeichnet, dass** der Rotor (5) zumindest eines Generators (3) permanentmagnetische Pole aufweist.

3. Einrichtung nach Anspruch 1, **dadurch gekennzeichnet, dass** der Stator (4) zumindest eines Generators (3) permanentmagnetische Pole aufweist.

4. Einrichtung nach einem der Ansprüche 1 bis 3, **dadurch gekennzeichnet, dass** die elektrische Leistung des Generators (3) einer einzelnen Turbinen-Generatoreinheit (1) zwischen 100 kW und 1000 kW, vorzugsweise zwischen 200 kW und 700 kW beträgt.

5. Einrichtung nach einem der Ansprüche 1 bis 4, **dadurch gekennzeichnet, dass** die Anzahl der übereinander und/oder nebeneinander angeordneten Turbinen-Generatoreinheiten (1) zwischen 5 und 500, vorzugsweise zwischen 50 und 250 beträgt.

6. Einrichtung nach einem der Ansprüche 1 bis 5, **dadurch gekennzeichnet, dass** die Turbinen-Generatoreinheiten (1) bzw. die Module (23) mit einer Einrichtung zum Heben und Senken (25) verbindbar sind.

7. Einrichtung nach einem der Ansprüche 1 bis 6, **dadurch gekennzeichnet, dass** die Turbinen-Generatoreinheiten (1) zumindest teilweise durch das vorbeifließende Medium kühlbar sind.

8. Einrichtung nach einem der Ansprüche 1 bis 7, **dadurch gekennzeichnet, dass** zumindest eine Turbinen-Generatoreinheit (1) als Rohrturbinen-Generatoreinheit ausgebildet ist.

9. Einrichtung nach Anspruch 8, **dadurch gekennzeichnet, dass** die Turbinen-Generatoreinheiten (1) in an sich bekannter Weise im Bereich des Turbinenläufers und/oder in ihrem im wesentlichen zylindrischen Bereich des Turbinengehäuses an den zugehörigen Rahmen oder Rahmenelementen des Moduls abgestützt sind.

10. Einrichtung nach Anspruch 9, **dadurch gekennzeichnet, dass** in Strömungsrichtung vor den Turbinenläufern der Turbinen-Generatoreinheiten (1) eines Moduls (23) Leitschaufeln (6) angeordnet sind, mittels welchen die Turbinen-Generatoreinheiten (1) gehalten werden.

11. Einrichtung nach Anspruch 8, 9 oder 10, **dadurch gekennzeichnet, dass** die Turbinen-Generatoreinheiten (1) mit Saugrohren (15) versehen sind, welche von dem die Turbinen-Generatoreinheiten (1) antreibenden Medium durchströmbar sind.

12. Einrichtung nach einem der Ansprüche 1 bis 7, **dadurch gekennzeichnet, dass** die Turbine (2) einer Turbinen-Generatoreinheit (1) drehbar gelagerte Turbinenschaufeln (11) aufweist, die im Bereich ihrer äußeren Enden kraftschlüssig mit einem ringförmigen Rotor (5) des Generators (3) der Turbinen-Generatoreinheit (1) verbunden sind, und wobei der Stator (4) des Generators (3) der Turbinen-Generatoreinheit (1) konzentrisch um den Rotor (5) drehfest in dem Modul (23) angeordnet ist.

13. Einrichtung nach Anspruch 12, **dadurch gekennzeichnet, dass** die durch den Rotor (5) bzw. Stator (4) des Generators (3) definierte Öffnung von dem die Turbine (2) antreibenden Medium durchströmbar ist.

14. Einrichtung nach Anspruch 12 oder 13, **dadurch gekennzeichnet, dass** die Statoren (4) benachbarter Turbinen-Generatoreinheiten (1) eines Moduls (23) unmittelbar nebeneinander und/oder übereinander angeordnet sind.

15. Einrichtung nach einem der Ansprüche 12 bis 14, **dadurch gekennzeichnet, dass** die Turbinen-Generatoreinheiten (1) mit Einlaufrohren (7) versehen sind, welche von dem die Turbinen-Generatoreinheiten (1) antreibenden Medium durchströmbar sind.

16. Einrichtung nach Anspruch 15, **dadurch gekennzeichnet, dass** die Einlaufrohre (7) benachbarter Turbinen-Generatoreinheiten (1) unmittelbar nebeneinander und/oder übereinander angeordnet sind.

17. Einrichtung nach Anspruch 15 oder 16, **dadurch gekennzeichnet, dass** das Einlaufrohr (7) im Bereich der Turbine (2) bzw. des Generators (3) als ein Gehäuse ausgebildet ist, in welchem der Stator (5) verankert ist.

18. Einrichtung nach einem der Ansprüche 15 bis 17, **dadurch gekennzeichnet, dass** in den Einlaufrohren (7) der Turbinen-Generatoreinheiten (1) eines Moduls (23) Leitschaufeln (6) angeordnet sind, mittels welchen die Turbine (2) und der Rotor (5) des Generators (3) an dem Einlaufrohr (7) gehalten werden.

19. Einrichtung nach einem der Ansprüche 12 bis 18, **dadurch gekennzeichnet, dass** der Ringraum (14) zwischen Rotor (5) und Stator (4) des Generators (3) mit einem Raumabschnitt verbunden ist, welcher von dem durch die Turbine fließenden Medium durchströmt wird, und dass dieser Ringraum (14) von dem Medium durchströmbar ist.

20. Einrichtung nach Anspruch 19, **dadurch gekennzeichnet, dass** der Ringraum zu beiden Seiten des Rotors (5) bzw. Generators (3) über den gesamten Umfang durchströmbar ist.

21. Einrichtung nach Anspruch 19 oder 20, **dadurch gekennzeichnet, dass** der Stator (4) und der Rotor (5) einzeln gegen Eindringen des vorbeiströmenden Mediums abgedichtet bzw. gegenüber dem Medium elektrisch isoliert ausgebildet sind.

22. Einrichtung nach einem der Ansprüche 12 bis 21, **dadurch gekennzeichnet, dass** der Spalt zwischen Rotor (5) und Stator (4) des Generators (3) gegenüber dem die Turbine (2) antreibenden Medium gedichtet ist und der Ringraum (14) zwischen Rotor (5) und Stator (4) mit einem Gas, insbesondere Luft, gefüllt ist.

23. Einrichtung nach Anspruch 22, **dadurch gekennzeichnet, dass** die Dichtung entlang des Rotors (5) bzw. des Stators (4) angeordnet und vorzugsweise am Rotor (5) oder am Stator (4) befestigt ist.

24. Einrichtung nach einem der Ansprüche 1 bis 23, **dadurch gekennzeichnet, dass** die Turbine (2) zur Energieerzeugung in beide Richtungen drehbar ausgebildet ist.

25. Einrichtung nach einem der Ansprüche 1 bis 24, **dadurch gekennzeichnet, dass** die Ausrichtung der Turbinenschaufeln (11) und/oder der Leitschaufeln (6) bezüglich der Strömungsrichtung des Mediums verstellbar sind.

26. Anlage zur Erzeugung elektrischer Energie aus einem strömenden Medium, z.B. Wasser, mit einer Dammstruktur (20) und mit einer Mehrzahl von Turbinen-Generatoreinheiten (1), die übereinander und/oder nebeneinander angeordnet und miteinander zu einem oder mehreren Modulen (23) verbunden sind und gegebenenfalls eine Mehrzahl von Modulen (23) nebeneinander angeordnet und an der Dammstruktur (20) abgestützt sind, wobei die Generatoren (3) der Turbinen-Generatoreinheiten (1) als Synchrongeneratoren ausgebildet sind, die zur Erregung permanentmagnetische Pole aufweisen.

27. Anlage nach Anspruch 26, **dadurch gekennzeichnet, dass** die Dammstruktur (20) eine Mehrzahl von Dammpfeilem aufweist, zwischen welchen das Medium vorbeiströmen kann, wobei zwischen zwei benachbarten Pfeilern zumindest je ein mittels einer Hebeeinrichtung (25) heb- und senkbares Modul (23) mit je einer Mehrzahl von Turbinen-Generatoreinheiten (1) angeordnet und an den Pfeilern abgestützt und geführt ist.

28. Verfahren zum Umbau einer Struktur (20) zum zumindest temporären Speichern eines fließfähigen Mediums, z.B. Wasser, in eine Anlage zur Erzeugung elektrischer Energie, bei welchem die Struktur (20) zumindest ein Element zum Speichern des Mediums aufweist, z.B. ein Wehr (21), und bei welchem ein den Abmessungen des lösbaren Elements entsprechendes Modul (23) hergestellt wird, welches aus einer Anzahl von nebeneinander und/oder übereinander angeordnete Turbinen-Generatoreinheiten (1), mit Synchrongeneratoren mit permanentmagnetischer Erregung, hergestellt wird, gegebenenfalls ein Mittel zum Heben und Senken des lösbaren Elementes an das Gewicht des Moduls (23) angepasst oder neu installiert wird, und das lösbare Element mit Hilfe des Mittels zum Heben und Senken (25) von der Struktur (20) entfernt und das Modul (23) mit den Turbinen-Generatoreinheiten (1) anstelle oder zusätzlich zu dem lösbaren Element in der Struktur mit Hilfe des Mittels zum Heben und Senken (25) positioniert wird, wobei die in dem Modul (23) angeordneten Turbinen-Generatoreinheiten (1) über eine Leitung zum Abführen der durch die Turbinen-Generatoreinheiten (1) erzeugten elektrischen Energie mit einem Energieversorgungsnetzwerk verbunden werden und, erforderlichenfalls, bei zumindest teilweisem Abließen des gespeicherten Mediums durch die Turbinen-Generatoreinheiten (1) des Moduls (23), elektrische Energie erzeugt wird, und wobei gegebenenfalls zur Wiederherstellung der Speicherfunktion der Struktur (20) das Modul (23) entfernt und durch das lösbare Element ersetzt wird.

29. Verfahren zum Erzeugen von elektrischer Energie aus einem strömenden Medium, z.B. Wasser, bei welchem eine Mehrzahl übereinander und/oder nebeneinander angeordnete, miteinander zu einem Modul (23) verbundene Turbinen-Generatoreinheiten (1) zeitgleich von dem Medium durchströmt werden, wobei drehbar gelagerte Turbinenschaufeln (11) der Turbinen (2) der Turbinen-Generatoreinheiten (1) des Moduls (23) und Rotoren (5) mit permanentmagnetischen Polen der Generatoren (3) der Turbinen-Generatoreinheiten (1) des Moduls (23) in Rotation versetzt werden, und wobei die Rotoren (5) mit permanentmagnetischen Polen der Generatoren (3) in Zusammenwirken mit konzentrisch um die Rotoren (5) drehfest in dem Modul (23) angeordnete Statoren (4) der Generatoren (3) der Turbinen-Generatoreinheiten (1) elektrische Energie erzeugen, welche über eine elektrische Leitung abgeführt wird.

## Claims

1. Equipment for generating electrical power from a flowing medium, e.g. water, having a number of turbine generator units (1) of which at least some are arranged one above another and/or beside one another and are connected to one another to form one or more modules (23), **characterised in that at** least one generator (3) of a turbine generator unit (1) is constructed as a synchronous generator, in which permanent magnetic poles are provided as excitation.

2. The equipment as claimed in claim 1, **characterised in that the** rotor (5) of at least: one generator (3) has permanent magnetic poles.

3. The equipment as claimed in claim 1, **characterised in that the** stator (4) of at least one generator (3) has permanent magnetic poles.

4. The equipment as claimed in one of claims 1 to 3, **characterised in that** the electrical output of the generator (3) of an individual turbine generator unit (1) is between 100 kW and 1000 kW, preferably between 200 kW and 700 kW.

5. The equipment as claimed in one of claims 1 to 4, **characterised in that** the number of turbine generator units (1) arranged one above another and/or beside one another is between 5 and 500, preferably between 50 and 250.

6. The equipment as claimed in one of claims 1 to 5, **characterised in that** the turbine generator units (1) or the modules (23) can be connected to raising and lowering device (25).

7. The equipment as claimed in one of claims 1 to 6, **characterised in that** the turbine generator units (1) can be at least partially cooled by the medium flowing past.

8. The equipment as claimed in one of claims 1 to 7, **characterised in that** at least one turbine generator unit (1) is constructed as a tubular turbine generator unit.

9. The equipment as claimed in claim 8, **characterised in that** the turbine generator units (1) are supported in a manner known per se on the associated frames or frame elements of the module in the area of the turbine rotor and/or in its substantially cylindrical area of the turbine housing.

10. The equipment as claimed in claim 9, **characterised in that** guide vanes (6), by means of which the turbine generator units (1) are held, are arranged upstream in the flow direction of the turbine rotors of the turbine generator units (1) of a module (23).

11. The equipment as claimed in claim 8, 9 or 10, **characterised in that** the turbine generator units (1) are provided with intake pipes (15) through which the medium that drives the turbine generator units (1) can flow.

12. The equipment as claimed in one of claims 1 to 7, **characterised in that the** turbine (2) of a turbine generator unit (1) has rotatably mounted turbine blades (11) which, in the area of their outer ends, are force locked to an annular rotor (5) of the generator (3) of the turbine generator unit (1), and the stator (4) of the generator (3) of the turbine generator unit (1) is arranged concentrically around the rotor (5) and locked against rotation in the module (23).

13. The equipment as claimed in claim 12, **characterised in that** the opening defined by the rotor (5) and stator (4) of the generator (3) can be flowed through by the medium that drives the turbine (2).

14. The equipment as claimed in claim 12 or 13, **characterised in that** the stators (4) of adjacent turbine generator units (1) of a module (23) are arranged immediately beside one another and/or one above another

15. The equipment as claimed in one of claims 12 to 14, **characterised in that** the turbine generator units (1) are provided with inlet pipes (7) through which the medium that drives the turbine generator units (1) can flow.

16. The equipment as claimed in claim 15, **characterised in that** the inlet pipes (7) of adjacent turbine generator units (1) are arranged immediately beside one another and/or one above another.

17. The equipment as claimed in claim 15 or 16, **characterised in that** the inlet pipe (7) in the area of the turbine (2) or of the generator (3) is constructed as a housing, in which the stator (5) is anchored.

18. The equipment as claimed in one of claims 15 to 17, **characterised in that** guide vanes (6), by means of which the turbine (2) and the rotor (5) of the generator (3) are held to the inlet pipe (7), are arranged in the inlet pipes (7) of the turbine generator units (1) of a module (23).

19. The equipment as claimed in one of claims 12 to 18, **characterised in that** the annular space (14) between rotor (5) and stator (4) of the generator (3) is connected to a spatial section which is flowed through by the medium that flows through the turbine, and that this annular space (14) can be flowed through by the medium.

20. The equipment as claimed in claim 19, **characterised in that** the annular space on both sides of the rotor (5) or generator (3) can be flowed through over the entire circumference.

21. The equipment as claimed in claim 19 or 20, **characterised in that** the stator (4) and the rotor (5) are sealed off individually against penetration of the medium flowing past, or are constructed to be insulated electrically with respect to the medium.

22. The equipment as claimed in one of claims 12 to 21, **characterised in that the** gap between rotor (5) and stator (4) of the generator (3) is sealed off with respect to the medium that drives the turbine (2), and the annular space (14) between rotor (5) and stator (4) is filled with a gas, in particular air.

23. The equipment as claimed in claim 22, **characterised in that** the seal is arranged along the rotor (5) or the stator (4) and is preferably fixed to the rotor (5) or to stator (4).

24. The equipment as claimed in one of claims 1 to 23, **characterised in that** the turbine (2) is designed to be rotatable in both directions to generate power.

25. The equipment as claimed in one of claims 1 to 24, **characterised in that** the alignment of the turbine blades (11) and/or of the guide vanes (6) with respect to the flow direction of the medium is adjustable.

26. An installation for the generation of electrical power from a flowing medium, e.g. water, having a dam structure (20) and a plurality of turbine generator units (1) which are arranged one above another and/or beside one another and are connected to one another to form one or more modules (23) and, if appropriate, a plurality of modules (23) are arranged beside one another and supported on the dam structure (20), the generators (3) of the turbine generator units (1) being constructed as synchronous generators which have permanent magnetic poles for excitation.

27. The installation as claimed in claim 26, **characterised in that** the dam structure (20) has a plurality of dam piers, between which the medium can flow past, in each case at least one module (23) that can be raised and lowered by means of a lifting device (25) and each having a plurality of turbine generator units (1) being arranged between two adjacent piers and being supported and guided on the piers.

28. A method of rebuilding a structure (20) for the at least temporary storage of a free-flowing medium, e.g. water, into an installation for generating electrical power, in which the structure (20) has at least one element for storing the medium, for example a weir (21), and in which a module (23) that corresponds to the dimensions of the releasable element is produced, said module being produced from a number of turbine generator units (1) arranged beside one another and/or one above another and having synchronous generators with permanent magnetic excitation, if necessary a means of raising and lowering the releasable element being adapted to the weight of the module (23) or installed new, and the releasable element being removed from the structure (20) with the aid of the means of raising and lowering (25), and the module (23) having the turbine generator units (1) being positioned in the structure, instead of or in addition to the releasable element, with the aid of the means for raising and lowering (25), the turbine generator units (1) arranged in the module (23) being connected to a power supply network via a line for carrying away the electrical power generated by the turbine generator units (1) and, if required, in the event that the stored medium flows at least partly away through the turbine generator units (1) of the module(23), electrical power being generated, and if necessary the module (23) being removed in order to reproduce the storage function of the structure (20) and replaced by the releasable element.

29. A method of generating electrical power from a flowing medium, for example water', in which a plurality of turbine generator units (1) arranged one above another and/or beside one another and connected to one another to form a module (23) are flowed through by the medium at the same time, rotatably mounted turbine blades (11) of the turbines (2) of the turbine generator units (1) of the module (23), and rotors (5) having permanent magnetic poles of the generators (3) of the turbine generator units (1) of the module (23) being set rotating, and the rotors (5) with permanent-magnetic poles belonging to the generators (3) producing electrical power in interaction with stators (4) which are arranged concentrically around the rotors (5), fixed against rotation in the module (23) and belong to the generators (3) of the turbine generator units (1), said power being carried away via an electric line.

## Revendications

1. Dispositif pour la génération d'énergie électrique à partir d'un fluide en écoulement, tel que l'eau, possédant un nombre d'unités turbogénératrices (1), dont au moins certaines sont superposées et/ou juxtaposées et reliées entre elles de manière à former un ou plusieurs modules (23), **caractérisé en ce qu'**au moins un générateur (3) d'une unité turbogénératrice (1) soit conçu comme générateur synchrone excité par des pôles à aimants permanents.

2. Dispositif selon la revendication 1, **caractérisé en ce que** le rotor (5) d'au moins un générateur (3)présente des pôles à aimants permanents.

3. Dispositif selon la revendication 1, **caractérisé en ce que** le stator (4) d'au moins un générateur (3) présente des pôles à aimants permanents.

4. Dispositif selon les revendications 1 à 3, **caractérisé en ce que** la puissance électrique du générateur (3) d'une seule unité turbogénératrice (1) se situe entre 100 kW et 1000 kW, de préférence entre 200 kW et 700 kW.

5. Dispositif selon l'une des revendications 1 à 4, **caractérisé en ce que** le nombre d'unités turbogénératrices (1) superposées et/ou juxtaposées se situe entre 5 et 500, de préférence entre 50 et 250.

6. Dispositif selon l'une des revendications 1 à 5, **caractérisé en ce que** les unités turbogénératrices (1), respectivement les modules (23), peuvent être reliés avec un dispositif de levage et d'abaissement.

7. Dispositif selon l'une des revendications 1 à 6, **caractérisé en ce que** les unités turbogénératrices (1) peuvent être au moins en partie refroidies par le média en écoulement.

8. Dispositif selon l'une des revendications 1 à 7, **caractérisé en ce qu'**au moins une unité turbogénératrice (1) est conçue comme unité turbogénératrice de type bulbe.

9. Dispositif selon la revendication 8, **caractérisé en ce que** les unités turbogénératrices (1) reposent, de manière connue en soi, sur les châssis du module ou éléments de châssis correspondants dans la zone de la roue motrice de la turbine et/ou au dans la zone en substance cylindrique de l'enveloppe de turbine.

10. Dispositif selon la revendication 9, **caractérisé en ce que** des aubes directrices permettant de maintenir les unités turbogénératrices (1) sont disposées en amont des roues motrices des unités turbogératrices (1) d'un module (23), dans le sens d'écoulement.

11. Dispositif selon la revendication 8, 9 ou 10 **caractérisé en ce que** les unités turbogénératrices (1) sont munies de tuyaux aspirateurs(15) pouvant être traversés par le fluide entraînant les unités turbogénératrices (1).

12. Dispositif selon l'une des revendications 1 à 7, **caractérisé en ce que** la turbine (2) d'une unité turbogénératrice (1) présente des ailettes de turbine rotatives(11), qui, au niveau de leurs extrémités extérieures, sont verrouillées à un rotor annulaire (5) du générateur (3) de l'unité turbogénératrice (1), le stator (4) du générateur (3) de l'unité turbogénératrice (1) étant disposé dans le module (23) de manière concentrique autour du rotor (5) et bloqué de manière à ne pas pouvoir tourner.

13. Dispositif selon la revendication 12, **caractérisé en ce que** l'ouverture définie par le rotor (5), respectivement le stator (4) du générateur (3) peut être traversée par le fluide entraînant la turbine (2).

14. Dispositif selon la revendication 12 ou 13, **caractérisé en ce que** les stators(4) d'unités turbogénératrices (1) adjacentes d'un module (23) sont directement superposés et/ou juxtaposés.

15. Dispositif selon l'une des revendications 12 à 14, **caractérisé en ce que** les unités turbogénératrices (1) sont munies de tuyaux d'arrivée (7) pouvant être traversés par le fluide entraînant les unités turbogénératrices (1).

16. Dispositif selon la revendication 15, **caractérisé en ce que** les tuyaux d'arrivée (7) d'unités turbogénératrices adjacentes (1) sont directement juxtaposés et/ou superposés.

17. Dispositif selon la revendication 15 ou 16, **caractérisé en ce que** le tuyau d'arrivée (7) est conçu dans la zone de la turbine (2) ou du générateur (3) comme un boîtier dans lequel est fixé le stator (5).

18. Dispositif selon l'une des revendications 15 à 17, **caractérisé en ce** des aubes directrices (6) permettant de maintenir la turbine (2) et le rotor (5) du générateur (3) sur le tuyau d'arrivée (7) sont disposées dans les tuyaux d'arrivée (7) des unités turbogénératrices (1) d'un module (23).

19. Dispositif selon l'une des revendications 12 à 18, **caractérisé en ce** l'espace annulaire (14) entre le rotor (5) et le stator (4) du générateur (3) est relié avec une section d'espace traversé par le fluide s'écoulant par la turbine et en ce que cet espace annulaire (14) peut être traversé par le fluide.

20. Dispositif selon la revendication 19, **caractérisé en ce que** l'espace annulaire des deux côtés du rotor (5), respectivement du générateur (3), peut être traversé sur tout le périmètre.

21. Dispositif selon la revendication 19 ou 20, **caractérisé en ce que** le stator (4) et le rotor (5) sont chacun étanchés contre la pénétration du fluide en écoulement, respectivement pourvus d'une isolation électrique contre le fluide.

22. Dispositif selon l'une des revendications 12 à 21, **caractérisé en ce que** l'interstice entre le rotor (5) et le stator (4) du générateur (3) est étanché contre le fluide entraînant la turbine (2) et que l'espace annulaire (14) entre le rotor (5) et le stator (4) est rempli de gaz et plus particulièrement d'air.

23. Dispositif selon la revendication 22, **caractérisé en ce que** le joint d'étanchéité est fixé le long du rotor (5), respectivement du stator (4) et de préférence fixé au rotor (5) ou au stator (4).

24. Dispositif selon l'une des revendications 1 à 23, **caractérisé en ce que** la turbine (2) pour la génération d'énergie est conçue de manière à pouvoir tourner dans les deux sens.

25. Dispositif selon l'une des revendications 1 à 24, **caractérisé en ce que** l'orientation des aubes de turbine (11) et/ou des aubes directrices (6) peut être réglée en fonction du sens d'écoulement du média.

26. Installation pour la génération d'énergie électrique à partir d'un fluide en écoulement, tel que l'eau, présentant une structure de barrage(20) et une pluralité d'unités turbogénératrices (1), superposées et/ou juxtaposées et reliées entre elles de manière à former un ou plusieurs modules (23) et, le cas échéant, une pluralité de modules (23) juxtaposés et reposant sur la structure de barrage (20), les générateurs (3) des unités turbogénératrices (1) étant conçus comme des générateurs synchrones excités à partir de pôles à aimants permanents.

27. Installation selon la revendication 26, **caractérisée en ce que** la structure de barrage (20) présente une pluralité de piliers de barrage entre lesquels le fluide peut circuler, au moins un module (23) à chaque fois levable ou abaissable à l'aide d'un dispositif de levage (25) étant disposé entre deux piliers adjacents et appuyé et guidé sur les piliers, chaque module possédant une pluralité d'unités turbogénératrices (1).

28. Procédé pour la transformation d'une structure (20) visant à retenir un fluide tel que l'eau au moins de manière temportaire dans une installation prévue pour la génération d'énergie électrique, la structure (20) présentant au moins un élément pour la retenue du média, tel qu'un barrage mobile (21) et un module (23) correspondant aux dimensions de l'élément amovible étant fabriqué à partir d'une pluralité d'unités turbogénératrices (1) juxtaposées ou superposées (1) avec des générateurs synchrones excités par des aimants permanents, un dispositif de levage ou d'abaissement pour l'élément amovible étant le cas échéant adapté au poids du module (23) et installé, et l'élément amovible étant retiré de la structure (20) à l'aide du dispositif de levage et d'abaissement (25) et le module (23) étant positionné dans la structure avec les unités turbogénératrices (1) à la place ou en plus de l'élément amovible à l'aide du dispositif de levage et d'abaissement (25), les unités turbogénératrices (1) étant reliées à un réseau d'alimentation d'énergie via une conduite pour l'évacuation de l'énergie électrique générée par les unités turbogénératrices (1) et, si nécessaire, de l'énergie électrique étant générée par l'écoulement au moins partiel du fluide retenu au travers des unités turbogénératrices (1) du module (23) et le module (23) étant le cas échéant supprimé et remplacé par l'élément amovible pour rétablir la fonction de retenue de la structure (20).

29. Procédé pour la génération d'énergie électrique à partir d'un fluide en écoulement tel que l'eau selon lequel une pluralité d'unités turbogénératrices (1) superposées et/ou juxtaposées et reliées entre elles de manière à former un module (23) sont traversées simultanément par un fluide, des aubes de turbines rotatives (11) des turbines (2) des unités turbogénératrices (1) du module (23) et des rotors (5) avec des pôles à aimants permanents des générateurs (3) des unités turbogénératrices (1) du module (23) étant mises en rotation, et les rotors (5) avec les pôles à aimants permanents des générateurs (3) générant de l'énergie électrique en combinaison avec des stators (4) des générateurs (3) des unités turbogénératrices disposés de manière concentrique autour des rotors (5) et fixés dans le module (23) de manière à ne pas tourner ; l'énerige électrique étant évacuée via une conduite électrique.
